# EUROPEAN PATENT SPECIFICATION

(11) **EP 1 944 843 B1**
(45) Date of publication and mention of the grant of the patent: **24.07.2013**
(21) Application number: 07020271.8
(22) Date of filing: 17.10.2007
(51) Int. Cl.: H02B 1/052

(54) **Device for fastening a component supporting rail to the frame of an electrical control panel**
Vorrichtung zum Befestigen eines Komponententrägerschiene am Rahmen einer elektrischen Schalttafel
Dispositif pour la fixation d'un rail support de composant sur le cadre d'un panneau de commande électrique

(30) Priority: 10.01.2007 IT MI20070024
(43) Date of publication of application: 16.07.2008
(73) Proprietor: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- EP-A- 1 693 937
- DE-B- 1 060 955
- US-A- 4 471 930

## Description

The present invention relates to a device for fastening a component supporting rail to the frame of an electrical control panel.

As is known, electrical control panels are generally constituted by a frame to which front panels and at least one access door are applied.

Electrical components are installed in the control panel by using rails which are fastened to the sides of the control panel, on the uprights or on the side walls.

The rails have standard dimensions and the electrical components are also standardized; however, they can have different depths depending on the type of component.

In order to keep all the components aligned on the outer surface of the control panel, the rails should be fitted in at least two different positions, an inner one and an outer one.

To reduce installation times, various systems for fastening the rails to the uprights of the control panel have been proposed.

EP1693937 discloses a system for fastening a DIN rail to the uprights of an electrical control panel. Such system comprises brackets, at each end of the rail. The brackets can be fastened to the upright. A plate is fixed to the end of the rail. The bracket fastened to the upright has a retention means, which is constituted by an elastic blade which is arranged longitudinally within the bracket. The system has the drawback that it must be entirely assembled during installation and that excessive pressure on the rail can cause the disengagement of the retention means due to the longitudinal arrangement of the elastic blade.

The aim of the present invention is to provide an improved device for fastening a rail to the frame of an electrical control panel.

An object of the invention is to provide a device which allows quicker and easier installation of the rail.

A further object of the invention is to provide a device which is reliable and safe in use.

This aim and these and other objects, which will become better apparent hereinafter, are achieved by a device according to claim 1.

Further characteristics and advantages of the invention will become better apparent from the description of preferred but not exclusive embodiments thereof, illustrated by way of non-limiting example in the accompanying drawings, wherein:

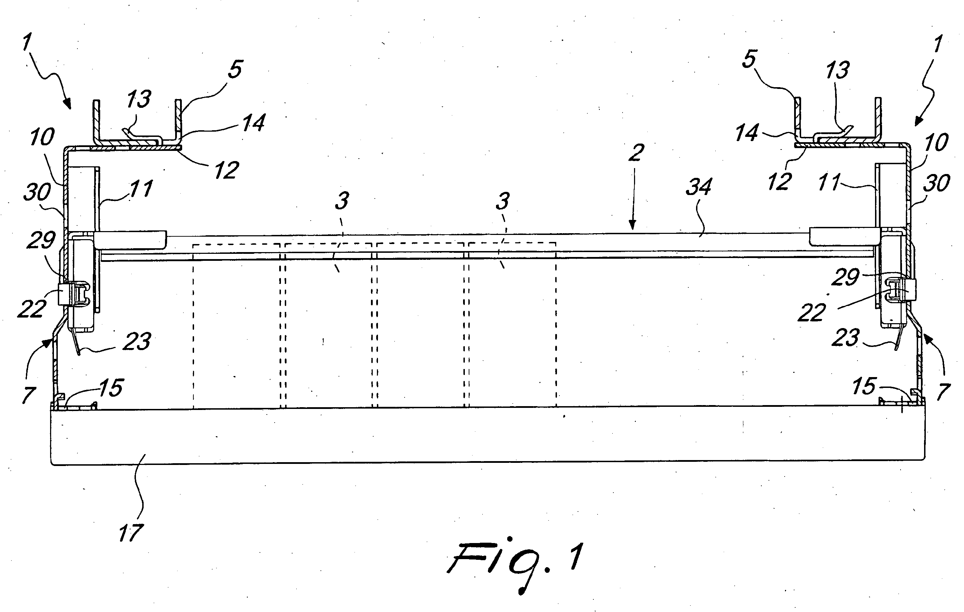

Figure 1 is a partially sectional top view of a component supporting rail which is fastened to the frame of an electrical control panel by means of the fastening device according to the present invention;

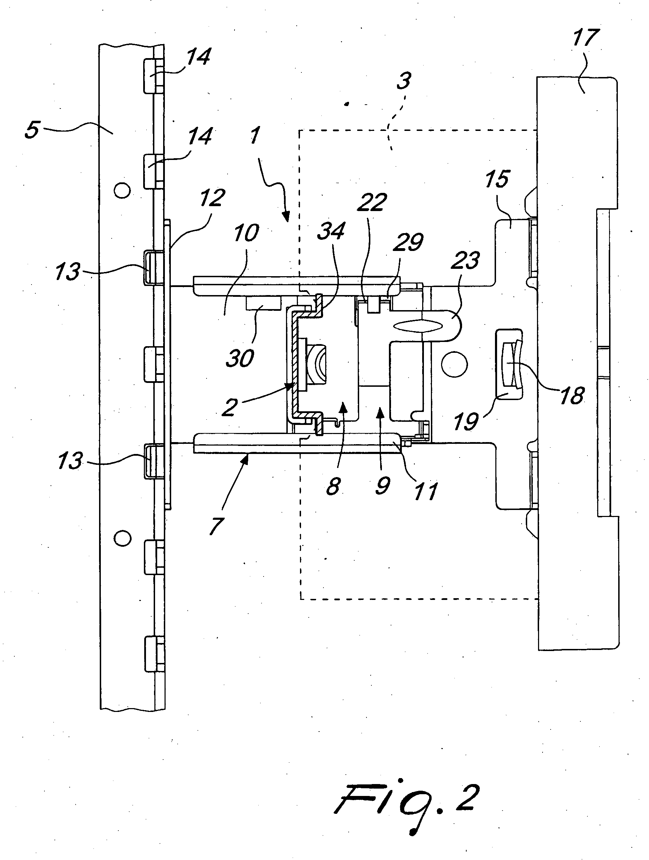

Figure 2 is a side view of the rail, fastened to the frame of the electrical control panel in an outer position;

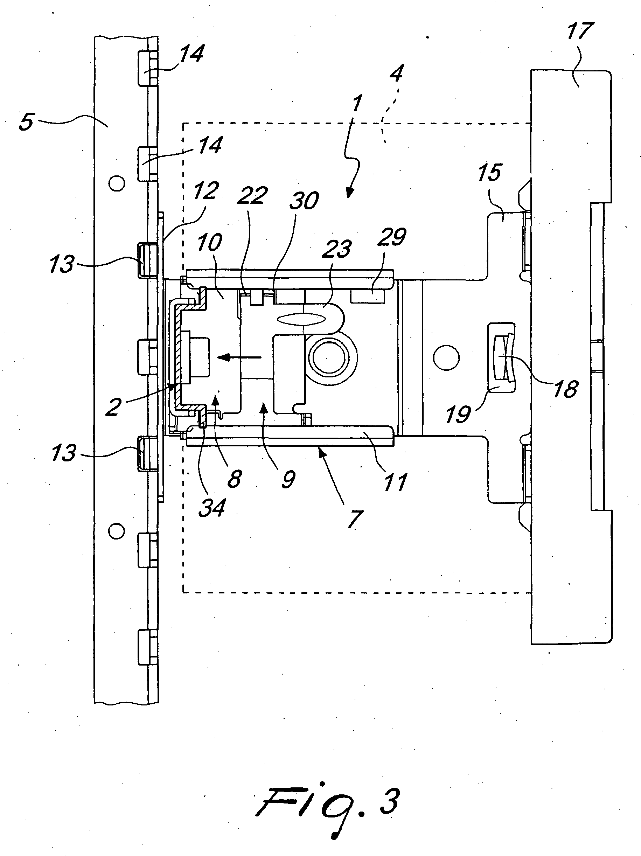

Figure 3 is a side view of the rail, fastened to the frame of the electrical control panel in an inner position;
Figure 4 is a top view of an end of the rail, which is fastened to the frame of the electrical control panel in an outer position;

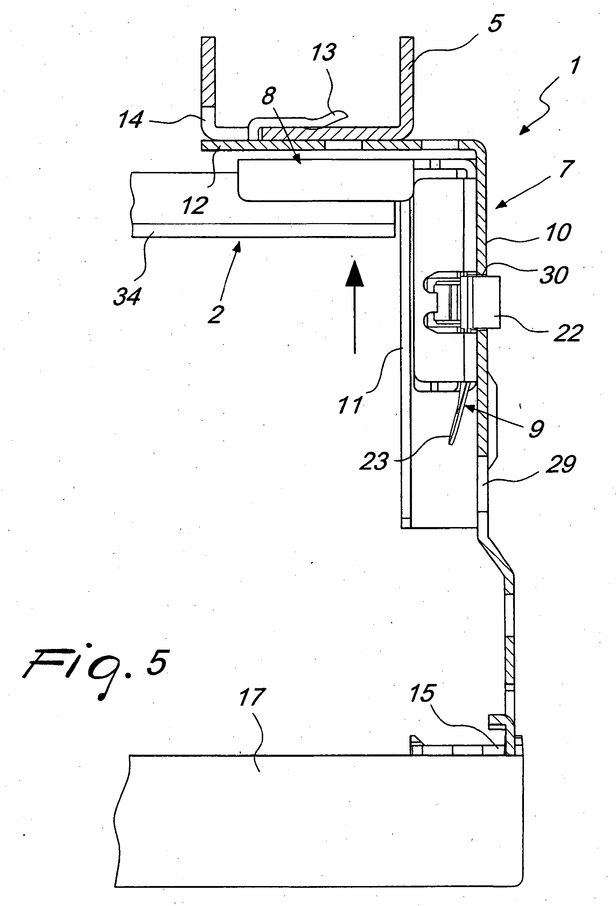

Figure 5 is a top view of an end of the rail, fastened to the frame of the electrical control panel in the inner position;

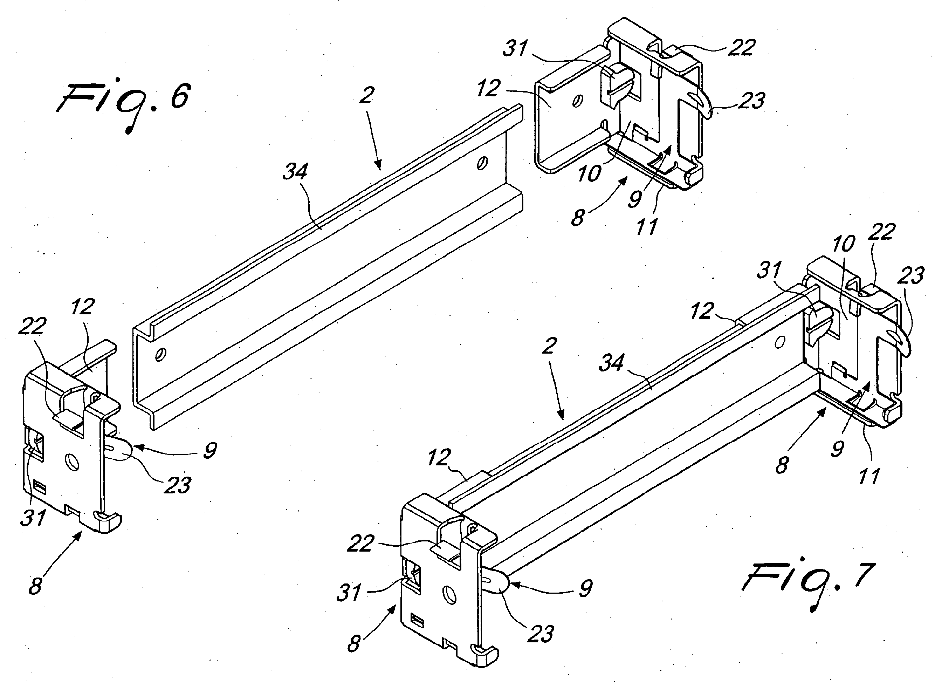

Figure 6 is an exploded perspective view of the rail;
Figure 7 is a perspective view of the rail;

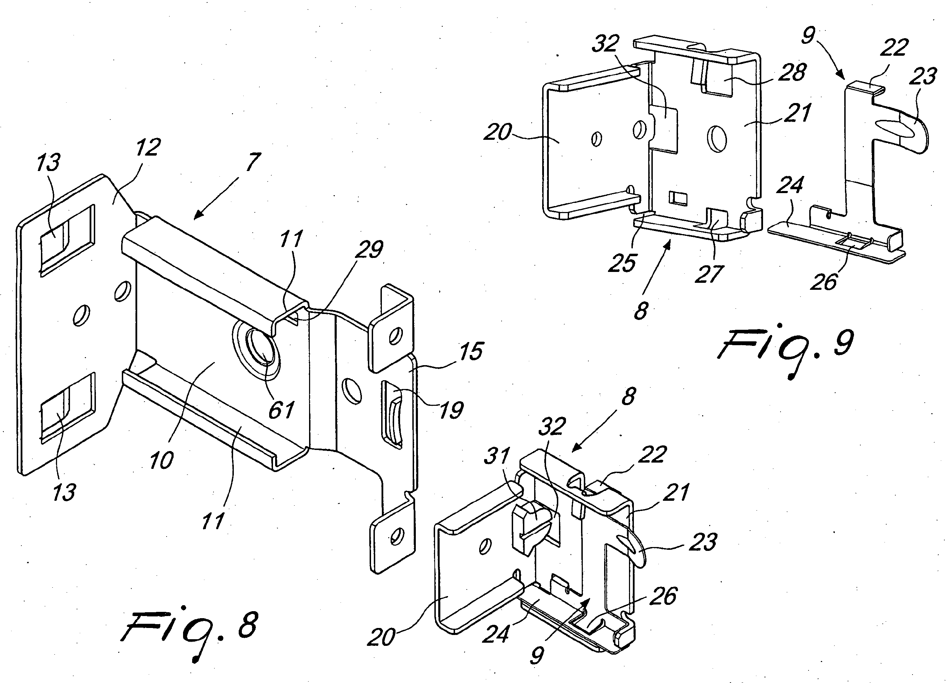

Figure 8 is an exploded perspective view of a bracket and of an L-shaped member which constitute the device for fastening the component supporting rail;
Figure 9 is an exploded perspective view of the L-shaped member and of the spring that constitute the fastening device of the component supporting rail;

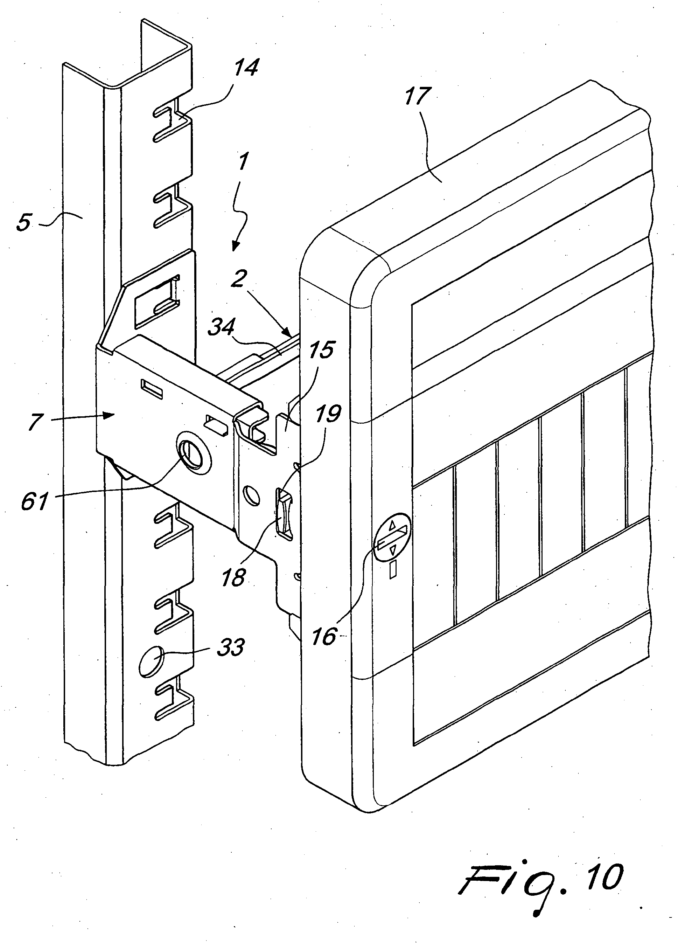

Figure 10 is a partial perspective view of the fastening of the protective panel;

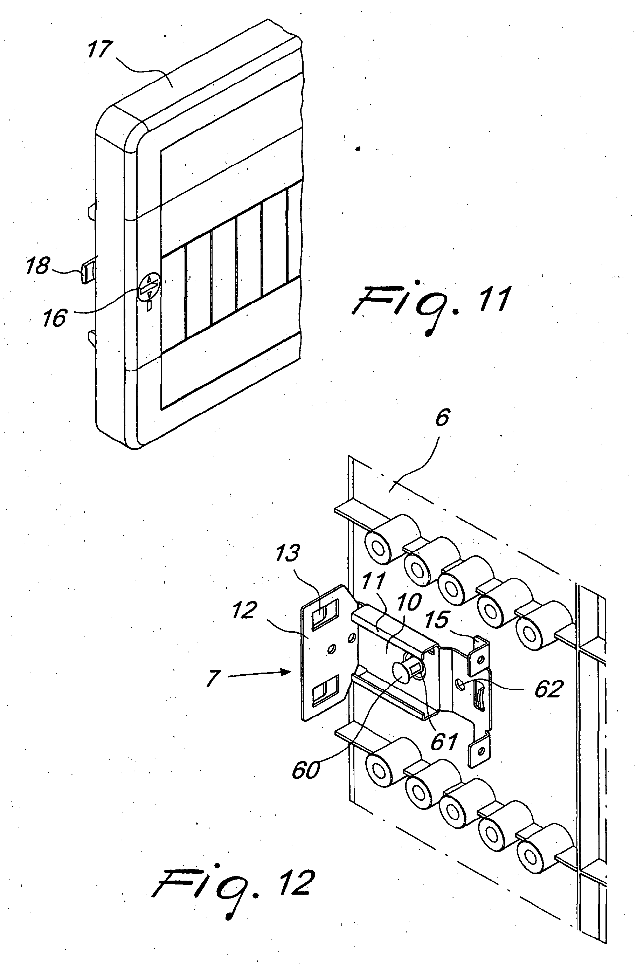

Figure 11 is a perspective view of an end of the protective panel;
Figure 12 is a perspective view of the system for fastening the bracket to a side of the electrical control panel.

With reference to the cited figures, a device according to the invention, generally designated by the reference numeral 1, is adapted to fix a component supporting rail 2 to the structure of an electrical panel or cabinet, in order to support a plurality of electrical components, such as circuit breakers and the like, which are shown schematically in dashed lines and are designated by the reference numerals 3 and 4.

The component supporting rail 2 is typically constituted by a rail 34, also known as DIN rail, which is provided with two L-shaped members 8 at its ends, and can be fastened to uprights 5 or to sides 6 of the structure of the electrical control panel or cabinet by means of brackets 7.

The fastening device according to this invention comprises a bracket 7, on which it is possible to lock, in at least two positions, an L-shaped member 8 which is provided with an elastic means 9 constituted by a spring. An L-shaped member 8 is fastened to each end of the rail 34.

The bracket 7 comprises a longitudinal portion 10, which is provided with guides 11 which slidingly accommodate the L-shaped member 8, and a base portion 12, which is arranged at right angles with respect to the longitudinal portion.

The base portion 12 is provided with two teeth 13, which engage slots 14 provided on the uprights 5 in order to fix the bracket at the chosen height on the uprights.

The bracket 7 has a free end 15 to which an end of a protective panel 17 can be fixed by a locking means 16, namely by a quarter-turn captive screw provided with a lever 18 which engages a retainer constituted by a hollow 19 formed on the free end 15 of the bracket 7.

The L-shaped member 8 has a transverse portion 20 and a longitudinal portion 21.

The transverse portion 20 is fastened to the end of the rail 34, for example by screws, while the longitudinal portion 21 is associated slidingly with the guides 11 of the longitudinal portion 10 of the bracket 7.

The longitudinal portion 21 of the L-shaped member 8 accommodates the spring 9, which is provided with a locking tooth 22 and an actuation tab 23.

The spring 9 is locked in the L-shaped member 8 by a longitudinal tab 24, which runs at right angles to the body of the spring 9.

The longitudinal tab 24 is inserted in a slot 25 of the L-shaped member and, by means of a tooth 26, engages an opening 27 of the L-shaped member.

The locking tooth 32 of the spring passes through an opening 28 of the L-shaped member 8 so as to engage an outer slot 29 or an inner slot 30 which are provided on the longitudinal portion 10 of the bracket 7.

The actuation tab 23 lies longitudinally within the L-shaped member 8 and at right angles to the spring portion provided with the locking tooth 22, which accordingly acts at right angles to the outer slot 29 and inner slot 30 provided on the longitudinal portion 10 of the bracket 7.

This transverse arrangement of the spring 9 and of its locking tooth 22 prevents the spring from flexing because of a force applied to the rail and therefore to the L-shaped member 8.

The spring 9 can flex in the direction for releasing the tooth 22 from the slot 29 or 30 only due to the effect of direct and intentional action on the actuation tab 23.

The spring 9 can be applied easily by snap action to the L-shaped member during production.

An eccentric screw 31 is riveted onto the L-shaped member 8 so as to act, through the opening 32, on the longitudinal portion 10 of the bracket 7 in order to eliminate the plays between the L-shaped member and the bracket.

The eccentric screw 31 can be actuated by a screwdriver when the L-shaped member has been placed in the chosen position.

The operation for fastening the rail 2 to the electrical control panel is as follows.

The brackets 7 are fastened to the uprights or sides of the control panel at the chosen height.

The bracket 7 is fastened to the upright by inserting the teeth 13 of the bracket in the slots 14 provided in the uprights 5 at the chosen height.

Holes 33 or other markings on the uprights indicate the position of the various center distances.

The bracket 7 is fastened to the side 6 of the electrical control panel by inserting a pin 60 in a flared hole 61 provided in the longitudinal portion 10 of the bracket 7 and by locking the bracket by means of a screw inserted in a second hole 62 of the bracket.

The rail 34, or DIN rail, provided with the L-shaped members 8 at its ends, is simply engaged with two brackets by inserting each L-shaped member 8 in the respective bracket 7 by using the guides 11 of the bracket itself.

The L-shaped member 8 slides within the bracket 7, in two clearly distinct positions which are defined by the engagement of the locking tooth 22 with the outer slot 29 or the inner slot 30 of the bracket.

The disengagement of the locking tooth 22 from the slot in order to move the L-shaped member can be performed with a finger or with a tool by acting on the actuation tab 23.

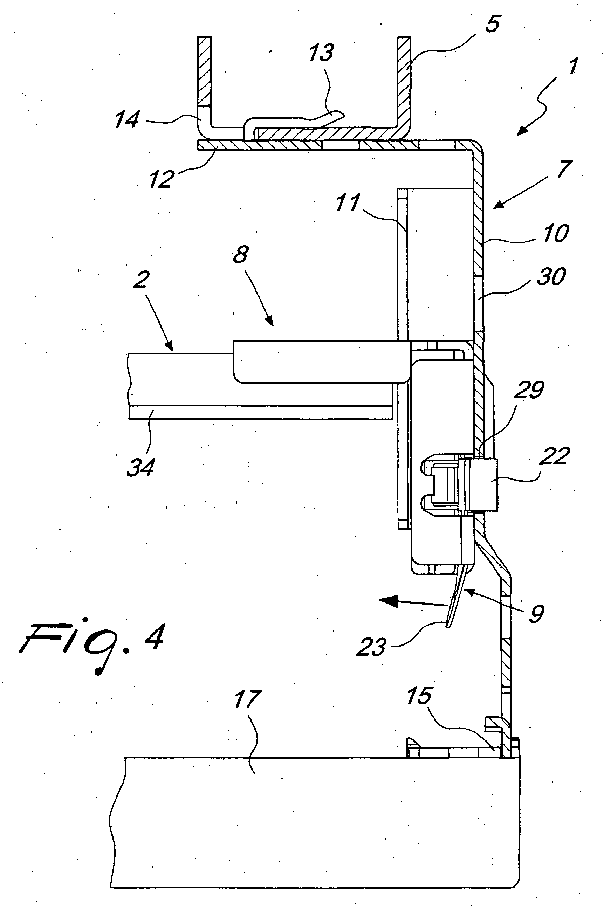

By moving the actuation tab at right angles to the plane of the longitudinal portion 10, as shown by an arrow in Figure 4, the locking tooth 22 protrudes from the slot 29 or 30, disengaging the L-shaped member.

Once the inner or outer position of the component supporting rail 2 has been established, one acts on the eccentric screws 31 of the two L-shaped members in order to eliminate the plays between the L-shaped members and the brackets.

At this point the electrical components 3 are fitted and finally the optional protective panel 17 is fitted.

The protective panel 17 is fastened by using the quarter-turn screws 16, which engage the retainer 19 by means of the lever 18.

It should be noted that in mounting the electrical components 3, normally one presses on the component supporting rail 2 by means of the components themselves. Contrary to conventional fastening systems, this pressure does not tend to disengage the L-shaped member from the bracket, but tends to consolidate the locking action by virtue of the arrangement of the locking tooth 32, which is perpendicular to the plane of the L-shaped member and is inserted in the slot 29, 30.

The L-shaped members 8, provided with the respective springs 9, are fixed to the ends of the rail 34 during production, so that the installation technician merely has to fasten the two brackets to the control panel and insert the component supporting rail 2 in the chosen outer or inner position and tighten the eccentric screws.

The operation is quick and easy and the number of components to be managed is reduced to three: the two brackets and the rail.

In practice it has been found that the invention achieves the intended aim and objects, a quick and reliable system for fastening the component supporting rails to electrical control panels having been provided.

The system for fastening the component supporting rail to the electrical control panel according to the present invention allows to significantly reduce the installation times of the control panel and to easily change the distance of the rail according to the type of device, which can be of the modular or box type and can have different depths, allowing to keep the components aligned with respect to the outer surface of the control panel.

A particular advantage of the present invention consists in that the transverse arrangement of the spring with respect to the L-shaped member and the bracket resides in that the force, no matter how powerful, applied to the rail cannot flex the spring and cannot cause the accidental disengagement of the component supporting rail from the bracket.

This application claims the priority of Italian Patent Application No. Ml2007A000024, filed on January 10, 2007.

## Claims

1. A device for fastening a component supporting rail, comprising a rail (34), a pair of brackets (7) which can be applied to the uprights (5) or side walls (6) of an electrical control panel or the like, and a means for locking said rail (34) to said brackets in at least two positions, an inner position, where the rail is closer to the back of said panel, and an outer position, where said rail is farther away from the back of said panel; each of said brackets (7) comprises a base portion (12) and a longitudinal portion (10), said base portion (12) being arranged at right angles with respect to said longitudinal portion (10);
said locking means comprising, an elastic member (9) which is associated with each end of said rail (34); **characterized in that** said locking means engages a respective slot (29, 30) of said brackets (7) in said at least two positions; whereby said locking means comprises an L-shaped member (8); said L-shaped member (8) comprises a transverse portion (29) and a longitudinal portion (21), said transverse portion (20) being fixed to the end of said rail (34); said longitudinal portion (21) being slidingly accommodated in guides (11) provided in said longitudinal portion (10) of each of said brackets (7); said longitudinal portion (21) of said L-shaped member (8) accommodates said elastic member (9); said L-shaped member (8) can be locked in said least two positions on each of said brackets (7) and is fastened to each end of said rail (34).

2. The device according to one or more of the preceding claims, **characterized in that** said elastic member (9) is constituted by a leaf spring which is provided with a locking tooth (22) and an actuation tab (23); said spring (9) is locked in said L-shaped member (8) by means of a longitudinal tab (24) which protrudes at right angles to the body of said spring (9); said longitudinal tab (24) is inserted in a slot (25) of said L-shaped member (8) and, by means of a tooth (26), engages an opening (27) of said L-shaped member (8); said spring locking tooth (32) passes through an opening (28) of said L-shaped member (8) so as to engage an outer slot (29) or an inner slot (30) of said respective slot (29, 30) provided on said longitudinal portion (10) of said bracket (7); said actuation tab (23) lies longitudinally within said L-shaped member (8) and at right angles to the portion of the spring provided with said locking tooth (22), which accordingly acts at right angles to said outer and inner slots (29, 30), provided on the longitudinal portion (10) of said bracket (7).

3. The device according to claim 2, **characterized in that** said spring (9) is applied by snap action to said L-shaped member (8).

4. The device according to one or more of the preceding claims, **characterized in that** it comprises an eccentric screw (31) which is riveted onto said L-shaped member (8) so as to act, through said opening (32), on said longitudinal portion (10) of said bracket (7) in order to eliminate plays between said L-shaped member (8) and said bracket (7); said eccentric screw can be actuated by a screwdriver when the component supporting rail has been arranged in the selected position.

5. The device according to one or more of the preceding claims, **characterized in that** it comprises a pin (60) which can be inserted in a flared hole (61) which is formed in said longitudinal portion (10) of said bracket (7) in order to fasten said bracket (7) to the side of an electrical control panel; said bracket (7) being locked by a screw which is inserted in a second hole (62) of said bracket (7).

6. The device according to one or more of the preceding claims, **characterized in that** said base portion (12) has two teeth (13) which engage slots (14) provided on said sides of said electrical control panel in order to fasten the bracket at the selected height on said uprights (5).

7. The device according to one or more of the preceding claims, **characterized in that** said bracket (7) has a free end (15); an end of a protective panel (17) being fastened to said free end (15) by a means (16) for locking the protective panel,

8. The device according to one or more of the preceding claims, **characterized in that** said means for locking the protective panel is constituted by a quarter-turn captive screw (16) which is provided with a lever (18) which engages a retainer constituted by a hollow (19) provided on the free end (15) of said bracket (7).

## Patentansprüche

1. Eine Vorrichtung zum Befestigen einer Komponententrägerschiene, die Folgendes umfasst: eine Schiene (34), ein Paar von Auslegern (7), die an den Pfosten (5) oder Seitenwänden (6) einer elektrischen Schalttafel oder dergleichen angebracht werden können, und ein Mittel zum Blockieren der Schiene (34) an den Auslegern in mindestens zwei Positionen, und zwar einer inneren Position, in der die Schiene näher an der Hinterseite der Tafel ist, und einer äußeren Position, in der die Schiene weiter von der Hinterseite der Tafel entfernt ist; wobei jeder der Ausleger (7) einen Basisabschnitt (12) und einen länglichen Abschnitt (10) umfasst, wobei der Basisabschnitt (12) in rechten Winkeln zu dem länglichen Abschnitt (10) angeordnet ist;
wobei das Blockiermittel ein elastisches Glied (9) umfasst, das mit jedem Ende der Schiene (34) verknüpft ist, **dadurch gekennzeichnet, dass** das Blockiermittel in einen entsprechenden Schlitz (29, 30) der Ausleger (7) in den mindestens zwei Positionen eingreift, wodurch das Blockiermittel ein L-förmiges Glied (8) umfasst; wobei das L-förmige Glied (8) einen transversalen Abschnitt (29) und einen länglichen Abschnitt (21) umfasst, wobei der transversale Abschnitt (20) am Ende der Schiene (34) befestigt ist, wobei der längliche Abschnitt (21) verschiebbar in Führungen (11) untergebracht ist, die in dem länglichen Abschnitt (10) jedes der Ausleger (7) bereitgestellt sind; wobei der längliche Abschnitt (21) des L-förmigen Glieds (8) das elastische Glied (9) aufnimmt; wobei das L-förmige Glied (8) in den mindestens zwei Positionen an jedem der Ausleger (7) blockiert werden kann und an jedem Ende der Schiene (34) befestigt wird.

2. Die Vorrichtung gemäß einem oder mehreren der obigen Ansprüche, **dadurch gekennzeichnet, dass** das elastische Glied (9) aus einer Blattfeder gebildet wird, die mit einem Sperrzahn (22) und einer Betätigungslasche (23) versehen ist; wobei die Feder (9) mit Hilfe einer länglichen Lasche (24), die in rechten Winkeln zum Körper der Feder (9) herausragt, in dem L-förmigen Glied (8) blockiert wird; wobei die längliche Lasche (24) in einen Schlitz (25) des L-förmigen Glieds (8) eingeführt wird und mit einem Zahn (26) in eine Öffnung (27) des L-förmigen Glieds (8) eingreift; wobei der Feder-Sperrzahn (32) durch eine Öffnung (28) des L-förmigen Glieds (8) dringt, um in einen Außenschlitz (29) oder einen Innenschlitz (30) der entsprechenden Schlitze (29, 30) einzugreifen, die in dem länglichen Abschnitt (10) des Auslegers (7) bereitgestellt sind; wobei die Betätigungslasche (23) in Längsrichtung innerhalb des L-förmigen Glieds (8) und in rechten Winkeln zu dem Abschnitt der Feder liegt, die mit dem Sperrzahn (22) versehen ist, der entsprechend in rechten winkeln zu den Außen- und Innenschlitzen (29, 30) wirkt, die im länglichen Abschnitt (10) des Auslegers (7) angebracht sind.

3. Die Vorrichtung gemäß Anspruch 2, **dadurch gekennzeichnet, dass** die Feder (9) durch Schnappwirkung an dem L-förmigen Glied (8) angebracht wird.

4. Die Vorrichtung gemäß einem oder mehreren der obigen Ansprüche, **dadurch gekennzeichnet, dass** sie eine Exzenterschraube (31) umfasst, die auf das L-förmige Glied (8) genietet wird, um durch die Öffnung (32) auf den länglichen Abschnitt (10) des Auslegers (7) einzuwirken, um Spiel zwischen dem L-förmigen Glied (8) und dem Ausleger (7) zu beseitigen; wobei die Exzenterschraube mit einem Schraubendreher betätigt werden kann, wenn die Komponententrägerschiene in der gewählten Position angeordnet wurde.

5. Die Vorrichtung gemäß einem oder mehreren der obigen Ansprüche, **dadurch gekennzeichnet, dass** sie einen Stift (60) umfasst, der in ein aufgeweitetes Loch (61) eingesetzt werden kann, welches in dem länglichen Abschnitt (10) des Auslegers (7) geformt ist, um den Ausleger (7) an der Seite einer elektrischen Schalttafel zu befestigen, wobei der Ausleger (7) mit einer Schraube blockiert wird, die in ein zweites Loch (62) des Auslegers (7) eingesetzt wird.

6. Die Vorrichtung gemäß einem oder mehreren der obigen Ansprüche, **dadurch gekennzeichnet, dass** der Basisabschnitt (12) zwei Zähne (13) hat, die in Schlitze (14) eingreifen, welche in den Seiten der elektrischen Schalttafel angebracht sind, um den Ausleger in der gewünschten Höhe an den Pfosten (5) zu befestigen.

7. Die Vorrichtung gemäß einem oder mehreren der obigen Ansprüche, **dadurch gekennzeichnet, dass** der Ausleger (7) ein freies Ende (15) hat, wobei ein Ende einer Schutztafel (17) durch ein Mittel (16) zum Blockieren der Schutztafel an dem freien Ende (15) befestigt ist.

8. Die Vorrichtung gemäß einem oder mehreren der obigen Ansprüche, **dadurch gekennzeichnet, dass** das Mittel zur Blockierung der Schutztafel aus einer unverlierbaren Vierteldrehungsschraube (16) besteht, die mit einem Hebel (18) versehen ist, welcher in einen Halter eingreift, der in einem Hohlraum (19) besteht, der am freien Ende (15) des Auslegers (7) bereitgestellt ist.

## Revendications

1. Dispositif de fixation d'un rail supportant un composant, comprenant un rail (34), une paire de supports (7) qui peuvent être appliqués sur les montants (5) ou les parois latérales (6) d'un panneau de commande électrique ou similaire et un moyen de verrouillage dudit rail (34) sur lesdits montants dans au moins deux positions, une position intérieure dans laquelle le rail est plus près de l'arrière dudit panneau et une position extérieure dans laquelle ledit rail est plus loin de l'arrière dudit panneau ; chacun desdits supports (7) comprenant une partie de base (12) et une partie longitudinale (10), ladite partie de base (12) étant disposée suivant un angle droit par rapport à ladite partie longitudinale (10) ;
ledit moyen de verrouillage comprenant un élément élastique (9) qui est associé à chaque extrémité dudit rail (34), **caractérisé en ce que** ledit moyen de verrouillage s'engage dans une fente respective (29, 30) desdits supports (7) dans au moins deux positions ; par quoi ledit moyen de verrouillage comporte un élément en forme de L (8) ; ledit élément en forme de L (8) comporte une partie transversale (29) et une partie longitudinale (21), ladite partie transversale (20) étant fixée à l'extrémité dudit rail (34) ; ladite partie longitudinale (21) étant logée de manière à pouvoir coulisser dans des guides (11) prévus dans ladite partie longitudinale (10) de chacun desdits supports (7) ; ladite partie longitudinale (21) dudit élément en forme de L (8) abritant ledit élément élastique (9) ; ledit élément en forme de L (8) pouvant être verrouillé dans lesdites au moins deux positions sur chacun desdits supports (7) et étant fixé à chaque extrémité dudit rail (34).

2. Dispositif selon une ou plusieurs des revendications précédentes, **caractérisé en ce que** ledit élément élastique (9) est constitué par un ressort à lame qui est équipé d'une dent de verrouillage (22) et d'un onglet d'actionnement (23) ; ledit ressort (9) est verrouillé dans ledit élément en forme de L (8) au moyen d'un onglet longitudinal (24) qui dépasse suivant un angle droit du corps dudit ressort (9) ; ledit onglet longitudinal (24) est inséré dans une fente (25) dudit élément en forme de L (8) et s'engage par une dent (26) dans un orifice (27) dudit élément en forme de L (8) ; ladite dent de verrouillage du ressort (32) passe à travers un orifice (28) dudit élément en forme de L (8) de manière à s'engager dans une fente extérieure (29) ou une fente intérieure (30) de ladite fente respective (29, 30) prévue sur ladite partie longitudinale (10) dudit support (7) ; ledit onglet d'actionnement (23) repose longitudinalement dans ledit élément en forme de L (8) et suivant un angle droit par rapport à la partie du ressort prévu avec ladite dent de verrouillage (22) qui agit en conséquence suivant un angle droit par rapport auxdites fentes intérieure et extérieure (29, 30) prévues sur la partie longitudinale (10) dudit support (7).

3. Dispositif selon la revendication 2, **caractérisé en ce que** ledit ressort (9) est appliqué par une action d'enclenchement sur ledit élément en forme de L (8).

4. Dispositif selon une ou plusieurs des revendications précédentes, **caractérisé en ce qu'**il comprend une vis excentrique (31) qui est rivetée sur ledit élément en forme de L (8) de manière à agir, à travers ledit orifice (32), sur ladite partie longitudinale (10) dudit support (7) afin d'éliminer les jeux entre ledit élément en forme de L (8) et ledit support (7) ; ladite vis excentrique peut être actionnée à l'aide d'un tournevis lorsque le rail supportant un composant a été disposé dans la position sélectionnée.

5. Dispositif selon une ou plusieurs des revendications précédentes, **caractérisé en ce qu'**il comprend une cheville (60) qui peut être insérée dans un trou évasé (61) qui est pratiqué dans ladite partie longitudinale (10) dudit support (7) afin de fixer ledit support (7) sur le côté d'un panneau de commande électrique ; ledit support (7) étant verrouillé par une vis qui est insérée dans un second trou (62) dudit support (7).

6. Dispositif selon une ou plusieurs des revendications précédentes, **caractérisé en ce que** ladite partie de base (12) a deux dents (13) qui s'engagent dans des fentes (14) prévues sur lesdits côtés dudit panneau de commande électrique afin de fixer le support à la hauteur sélectionnée sur lesdits montants (5).

7. Dispositif selon une ou plusieurs des revendications précédentes, **caractérisé en ce que** ledit support (7) a une extrémité libre (15) ; une extrémité d'un panneau protecteur (17) étant fixée à ladite extrémité libre (15) par un moyen (16) de verrouillage du panneau protecteur.

8. Dispositif selon une ou plusieurs des revendications précédentes, **caractérisé en ce que** ledit moyen de verrouillage du panneau protecteur est constitué par une vis captive quart de tour (16) qui est pourvue d'un levier (18) qui s'engage dans un système de retenue constitué par un creux (19) prévu sur l'extrémité libre (15) dudit support (7).
